**Europäisches Patentamt**

**European Patent Office**

**Office européen des brevets**

(19)

(11)  **EP 1 388 993 B1**

(12) **EUROPEAN PATENT SPECIFICATION**

(45) Date of publication and mention
of the grant of the patent:
**20.07.2005 Bulletin 2005/29**

(51) Int Cl.⁷: **H04L 29/12**

(21) Application number: **02017619.4**

(22) Date of filing: **05.08.2002**

(54) **IP-based communication system using uni- and bi-directional networks**

IP-Kommunikationssystem mit uni- und bi-direktionalen Netzen

Système de communication utilisant des réseaux uni- et bi-directionnels

(84) Designated Contracting States:
**DE FR GB**

(43) Date of publication of application:
**11.02.2004 Bulletin 2004/07**

(73) Proprietor: **Sony International (Europe) GmbH**
**10785 Berlin (DE)**

(72) Inventors:
• **Barletta, Antonio,**
**Advanced Techn. Ctr. Stuttgart**
**Heinrich-Hertz-Str. 1, 70327 Stuttgart (DE)**
• **Bittner, Rudolf, Advanced Techn. Ctr. Stuttgart**
**Heinrich-Hertz-Str. 1, 70327 Stuttgart (DE)**
• **Moser, Boris, Advanced Techn. Ctr. Stuttgart**
**Heinrich-Hertz-Str. 1, 70327 Stuttgart (DE)**

(74) Representative: **Müller - Hoffmann & Partner**
**Patentanwälte,**
**Innere Wiener Strasse 17**
**81667 München (DE)**

(56) References cited:
**EP-A- 1 204 275**     **WO-A-00/74333**
**US-A1- 2002 034 179**

• **LAURENT TOUTAIN: "Technique des réseaux**
**locaux sous Unix" 1994 , EDITIONS HERM S ,**
**PARIS XP002225840 * figures 73,76,78 * * page**
**17, paragraph 4 * * page 129, paragraphs 3,4 * ***
**page 131, paragraph 5 * * page 134, paragraph 2**
*** * page 142, paragraph 2 * * page 170, paragraph**
**4 ***
• **S. THOMSON, BELLCORE, T. NARTEN:**
**REQUEST FOR COMMENTS 1971, [Online] 31**
**August 1996 (1996-08-31), XP002225839**
**Retrieved from the Internet:**
**<URL:http://www.cis.ohio-state.edu/cgi-bin**
**/rfc/rfc1971.html> [retrieved on 2002-12-19]**

## Description

The invention relates to an IP-based communication system. More specifically, the invention relates to a method of communicating between a first and a second communication device which are linked with each other via a communication network.

During the last decades, IP-networks have become a very important communication standard for computer networks. Thousands of software/hardware solutions directly or indirectly based upon TCP/IP are available.

At first, communication via TCP/IP was more or less restricted to the Internet (Ethernet, Sonet, Token Ring, ATM, etc.) as a general purpose communication media. In recent years, however, the increasing number of software solutions being based on a TCP/IP pushed the use of TCP/IP also on other networks: Mobile phones (GSM, GPRS, UMTS), DAB and DVB-T. Such solutions, especially in the case of broadcast media, do only use a small part of the features offered by TCP/IP and cannot be regarded as "real" TCP/IP solution therefore.

It is an object of the present invention to provide a communication architecture which integrates a broadcast communication media (which shows unidirectional information flow) into a system of bi-directional networks (LAN, GSM, GPRS, etc., which show bi-directional information flow), but which nevertheless is capable to use all features offered by TCP/IP during a communication process which makes use of said broadcast communication media.

In order to solve this object, a method of communicating between a first and a second communication interface according to claim 1 is provided. Further, a communication system according to claim 9 is provided. Last, a computer program product and a computer readable storage means according to claims 15 and 16 are provided. Further features and embodiments of the present invention are described in respective subclaims, respectively.

A digital broadcast system is a system that provides a unidirectional digital data stream to a large number of terminals. Digital broadcast systems are for example digital radio, wireless digital TV, cable TV, satellite networks or the like. An important aspect of the present invention is that the broadcast communication network of said digital broadcast system can be interpreted as "normal" IP-communication network: a transmitter of the broadcast communication network can be regarded as a router of an IP-communication network, the broadcast medium (air) can be regarded as a subnet (or subnets) of an IP-communication network, and the broadcast receiver can be regarded as hosts (or, to be more exactly, network cards of hosts) being connected to said subnets of said IP-communication network (however, since the broadcast communication network is actually not a "normal" IP-communication network, it will be designated in the present invention as "virtual" IP-communication network). It has to be mentioned that also services itself (for example DAB subchannels and/or DRM services) offered by the digital broadcast system may be regarded as subnets of an IP-communication network.

Generally, the IP-protocol standard uses IP-addresses to reach devices being located within the IP-communication network. To do this, the "global" IP-communication network is divided into IP-subnets which can be addressed by corresponding IP-network addresses. Each device connected to an IP-subnet has a unique IP-address. The IP-address assigned to the IP-subnet and the IP-address assigned to the device connected to the IP-subnet usually have identical address parts. The address part which is identical is referred to as IP-network address part, wherein an address part which is different between those addresses is referred to as IP-host address parts. Usually, an IP-address is built in a way that it is possible to deduct the IP-network address from the IP-host address.

According to the present invention, like in a "normal" IP-communication network, each virtual IP-subnet can be identified by a corresponding virtual IP-network address part. Corresponding thereto, each virtual IP-host can be identified by a virtual IP-host address part. In the following, the term "IP-network" means a "normal" IP-communication network.

As already indicated, the transmitter of the digital broadcast network which broadcasts data to the broadcast receiver can be interpreted as a single router that delivers IP-packets to all virtual IP-hosts being connected to the virtual IP-subnets. Since the digital data stream broadcasted via the digital broadcast network is unidirectional, the virtual IP-hosts can only receive IP-packets, but they cannot send IP-packets via the virtual IP-subnets.

In order to overcome this drawback, the present invention provides a method, system and computer programm in claims 1, 9, 15 respectively.

Information which has to be transferred from the second communication device (which corresponds to a broadcast receiver) to the first communication device is encapsulated into IP-packets comprising an IP-network address part and an IP-host address part assigned to the first communication device, respectively, and then the IP-packets are sent to the first communication device using the IP-network. Thus, the virtual IP-hosts have the possibility to both receive IP-packets (via the digital broadcast network and/or the IP-network) and to send IP-packets (via the IP-network).

Above described invention has the advantage that only little effort is needed to seamlessly integrate a digital broadcast network into an IP-communication process: most hardware components used are standard hardware components; only little hardware/software extensions are needed. This will become apparent later on.

The second communication device may decide whether to use the virtual IP-network address part and the virtual IP-host address part as IP source address or to use an IP-network address part and an IP-host address part associated with said IP-network as IP source address when sending IP-packets via the IP-network to the first communication device. This enables the second communication device to decide via which data channel (digital broadcast network or IP-network) IP-packets are sent from the first communication device to the second communication device. In other words, the second communication device can choose the return-path of IP-packets being sent from the first communication device to the second communication device.

In other words: If the second communication device is regarded as a "client device" that requests information from the first communication device which can be regarded as "server device" sending corresponding responses in response to said information requests to the client device, above described mechanism can be expressed as follows: A client device connected to an IP-virtual broadcast medium and an IP-network (for example LAN, GSM, UMTS, WLAN) has the possibility to send IP-packets to the server device via said IP-network (the "outgoing" IP-interface). The server device will reply in an automatic way in dependence of the source address inside corresponding request IP-packets (the server device does not have to decide anything about IP-return paths, it just reacts "automatically" and sends response IP-packets back to the IP-source address of the incoming IP-packets). If the client device chooses to use the virtual broadcast IP-network as the interface for receiving IP-packet responses from future server device responses, it simply puts as source IP-address in the IP-request packet the IP-address of the IP-virtual broadcast network. The client can also choose the IP-network as the interface for receiving IP-packet responses from the server device, of course. In this case, no "manipulation" has to be done as far as the source IP-address is concerned.

In a preferred embodiment, the virtual IP-network address parts are determined according to a first algorithm which creates the virtual IP-network address parts in dependence of physical parameters being representative for the digital broadcast network and/or parts thereof and/or services offered via the digital broadcast network, respectively. Accordingly, the virtual IP-host address part is determined according to a second algorithm which creates the virtual IP-host address part in dependence of physical parameters being representative for the second communication device or parts thereof. The first and the second algorithm are preferably performed in the second communication device itself.

An alternative is to manage the process of generating the virtual IP-network address part/virtual IP-host address part by a central IP-address database system being located within the communication network (for example an Internet server), wherein said central IP-address database system supplies free IP-address parts in response to a contacting process of the second communication device.

As has become apparent, a general concept of the present invention is as follows: A TCP/IP suite (or TCP/IP network) is a communication system that uses the TCP/IP family of protocols (usually IP, UDP, TCP, HTTP, FTP, etc.). Up to now the TCP/IP suite was used to connect different PC-networks: LAN, ATM. Ethernet, Token Ring, and currently mobile phone. The TCP/IP suite is generally suitable for bi-directional (symmetric and asymmetric) communication systems. The present invention adapts TCP/IP to a broadcast medium. This adaption does not only use a common data format (where IP-packets are encapsulated into DAB and DVB), but is a "complete" adaption of TCP/IP, since the IP-protocol packet format, the addressing mechanism, the routing mechanism and the like are taken into account. DAB and DVB are currently using IP, but only as a data format protocol. Information to be transmitted is tunnelled from a transmitter to the receivers without using the whole capabilities of the TCP/IP suite - it is just a common data format. In contrast, in the present invention the broadcast network is integrated into IP-networks as a part of the IP-network itself: Terminal receivers have IP-addresses to perform broadcast system access, data is routed using addresses corresponding to the broadcast system, and multiple communication systems (in particular broadcast systems) are addressed at the same time in a sophisticated way.

To enable the above-described method, a broadcast router being connectable to the first communication device and the digital broadcast network may be used. This router routes IP-packets which comprise virtual IP-network address parts and which have been received from the first communication device via the digital broadcast network to the second communication device. It is necessary that said first algorithm is also performed in said broadcast router for reasons of address consistency.

The broadcast router mentioned above is connectable to an IP-network and a digital broadcast network and comprises means for:

- assigning virtual IP-subnets and corresponding virtual IP-network address parts to the digital broadcast network and/or parts thereof and/or services offered via said digital broadcast network, respectively,
- routing IP-packets which comprise said virtual IP-network address parts and which have been received from the IP-network into said digital broadcast network.

The broadcast router preferably comprises means for determining the virtual IP-network address parts in dependence of physical parameters being representative for the digital broadcast network and/or parts thereof and/or services offered via the digital broadcast network, respectively.

It is also provided a communication device being connectable to an IP-network and a digital broadcast network, wherein the communication device comprises means for:

- assigning virtual IP-subnets and corresponding virtual IP-network address parts to the digital broadcast network and/or parts thereof and/or services offered via the digital broadcast network, respectively,
- determining a virtual IP-host address part being representative for the communication device.

The communication device described in the last paragraph corresponds to the devices denoted by "second communication device" and "client device" in the foregoing description.

Preferably, the communication device creates the virtual IP-network address parts in dependence of physical parameters being representative for the digital broadcast network and/or parts thereof and/or services offered via the digital broadcast network, respectively, whereas the virtual IP-host address part is creatable in dependence of physical parameters being representative for the communication device.

Further, the communication device may comprise means for determining to which kinds of network it is currently connected.

The communication device may further comprise means for a seamless usage of (manipulating/changing) IP-network address parts and IP-host address parts of IP-packets before sending them via the IP-network to the first communication device. If the communication device for example detects that no broadcast signal is received (i.e. the communication device is not connected to the digital broadcast network), it may stop using the virtual IP-network address parts and the virtual IP-host address part as IP source address when sending IP-packets to another communication device via said IP-network, since no IP-packets can currently be received via the digital broadcast channel.

The communication system may further include a broadcast router according to the present invention which connects the first communication device to the digital broadcast network.

Preferably, the IP-network is the Internet directly connecting the first communication device with the second communication device. In this embodiment, the broadcast router preferably connects the Internet to the digital broadcast network.

The invention further provides a computer program product comprising computer program means adapted to perform/embody the inventive method/system when it is executed on a computer, a digital signal processor or the like.

Last, the invention provides a computer readable storage means adapted to store above described computer program product.

Further embodiments, features and advantages of the present invention will be explained in conjunction with the accompanying drawings, wherein:

**Fig. 1** shows two different ways of interpreting a broadcast system;

**Fig. 2** shows a preferred embodiment of a communication system according to the present invention;

**Fig. 3** shows incoming IP-address interfaces and outgoing IP-address interfaces of IP-hosts;

**Fig. 4** shows a schematic drawing illustrating the communication mechanism between two communication devices via an IP-network according to the prior art;

**Fig. 5** shows a schematic drawing illustrating a preferred embodiment of a communication mechanism between two communication devices according to the present invention;

**Fig. 6** shows a schematic drawing illustrating a preferred embodiment of a network access layer being used in conjunction with the communication mechanism according to the present invention;

**Fig. 7** shows a schematic drawing illustrating a preferred embodiment of a communication mechanism according to the present invention.

**Fig. 8A to 8F** show, as example, the data structure of IP-packets used by the inventive communication system.

While making reference to the drawings, identical or similar components are designated by the same reference numerals.

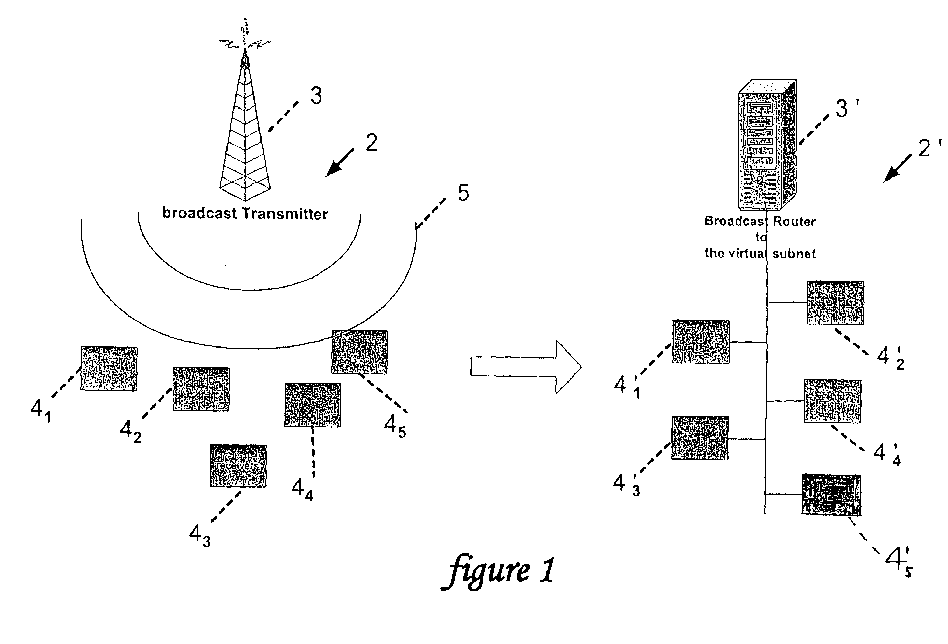

As can be taken from Fig. 1, a digital broadcast system 2 comprises a broadcast transmitter 3, a first to fifth receiver $4_1$ to $4_5$, and a digital broadcast network 5 which connects the broadcast transmitter 3 with the first to fifth receiver $4_1$ to $4_5$.

The digital broadcast system 2 can also be interpreted as a virtual IP-network 2' comprising a broadcast router 3' corresponding to the broadcast transmitter 3, and a first to fifth virtual IP-host $4'_1$ to $4'_5$ corresponding to the first to fifth broadcast receiver $4_1$ to $4_5$. The broadcast router 3' is connected to the first to fifth virtual IP-host $4'_1$ to $4'_5$ via a virtual IP-subnet 5' corresponding to the digital broadcast network 5.

Thus, the structure of an IP-communication system can be consistently mapped to a digital broadcast system.

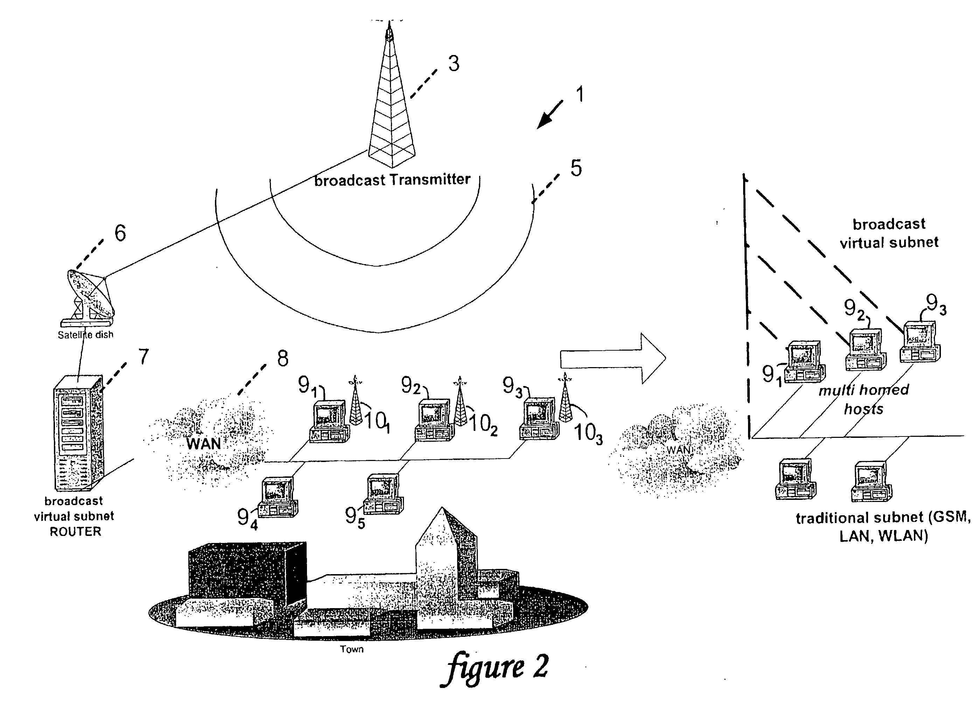

Fig. 2 shows a preferred embodiment of a communication system 1 according to the present invention. The communication system 1 comprises a broadcast transmitter 3, a digital broadcast network 5, a satellite dish 6, a broadcast router 7, a wide area network 8, a first to fifth IP-host $9_1$ to $9_5$, wherein the first to third IP-host $9_1$ to $9_3$ comprise a first to third broadcast receiver $10_1$ to $10_3$. The first to third IP-host $9_1$ to $9_3$ can both receive IP-packets via the a first to third broadcast receiver $10_1$ to $10_3$ and the digital broadcast network 5 and send/receive IP-packets via the wide area network 8, whereas the fourth and fifth IP-host $9_4$, $9_5$ can only send/receive IP-packets via the wide area network 8. The local area network being defined by the first to fifth IP-hosts $9_1$ to $9_5$ and respective interconnections may for example be layered in a town.

As indicated in Fig. 2, the first to third IP-host can be regarded to be in a "multihomed" condition. This term will be explained later.

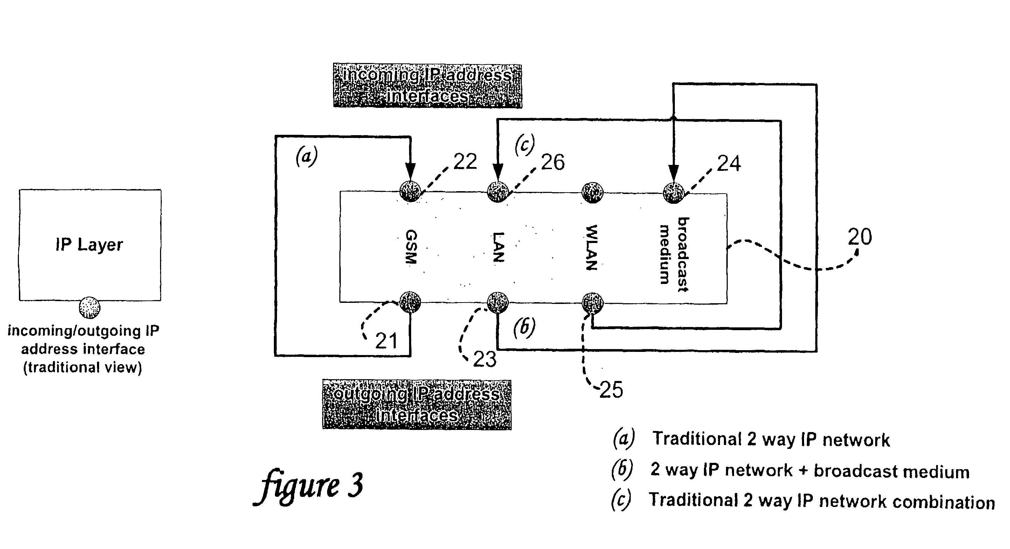

Fig. 3 shows possible incoming IP-address interfaces and outgoing IP-interfaces of IP-hosts.

The IP-hosts are indicated with reference numeral 20. In a first example, an IP-host sends IP-packets via a GSM outgoing interface 21 and receives IP-packets via a GSM incoming interface 22. Thus, the corresponding IP-host needs only one network card.

In a second example, an IP-host sends IP-packets via a LAN outgoing interface 23 and receives IP-packets via a digital broadcast incoming interface 24. In this case, the IP-host needs two network cards: one for the LAN-network, and one for the digital broadcast network. Thus, this IP-host can be said to be in a "multihomed" status.

In a third example, an IP-host sends IP-packets via a WLAN outgoing interface 25 and receives IP-packets via a LAN incoming interface 26. The corresponding IP-host therefore needs two network cards: a LAN-network card and a WLAN-network card. The current state of the art regarding hardware normally is a PC (e.g. Laptop) that might access multiple networks (LAN plug, GSM, WLAN, blue tooth, etc.). The software (operating system) does not use such a network access contemporarily.

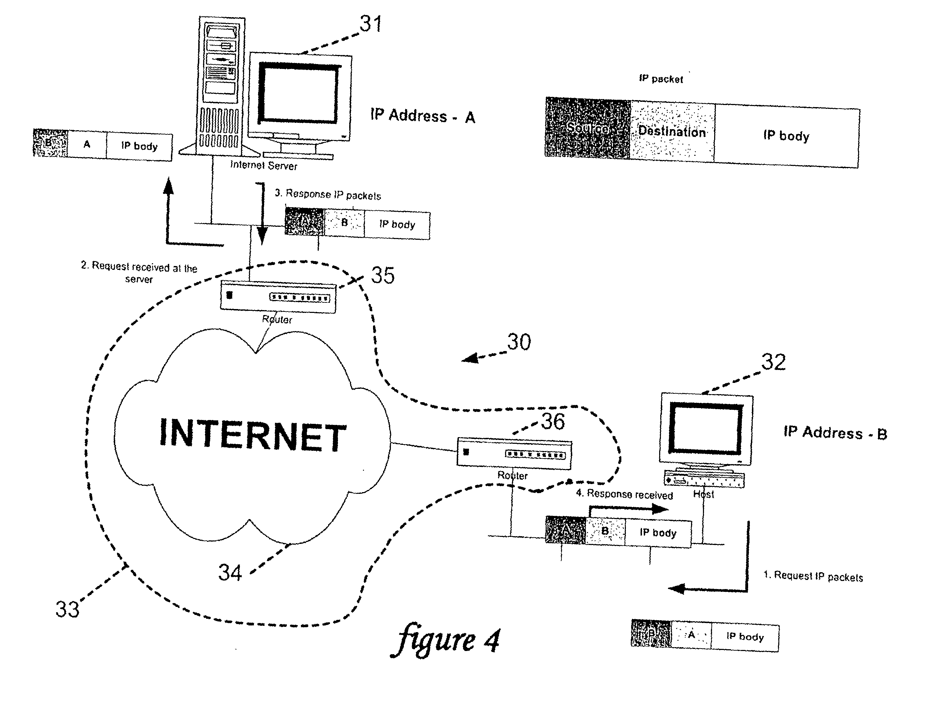

In the following, making reference to Fig. 4, a basic mechanism of IP-communication according to the prior art will be explained.

A communication system 30 comprises a first communication device 31, a second communication device 32, wherein the first and second communication device 31, 32 are connected with each other via a communication network 33 comprising the Internet 34 and a first and second router 35, 36. The first router 35 connects the Internet 34 to the first communication device 31, whereas the second router 36 connects the Internet 34 to the second communication device 32.

The first communication device 31 is identified by an IP-address A, whereas the second communication device 32 is identified by an IP-address B. When the second communication device 32 requests IP-packets from the first communication device 31 (for example during a download process of an HTML page), at least one IP-packet is sent from the second communication device 32 via the second router 36, the Internet 34 and the first router 35 to the first communication device 31. These IP-packets carry as IP source address the IP-address B and as IP-destination address the IP-address A.

The first communication device 31 analyses the IP source address, and sends required IP-packets carrying as destination IP-address the source IP-address of the received IP-packets. The source IP-address of sent IP-packets is the IP-address A. In other words, the source IP-address and the destination IP-address are switched. The required IP-packets are then sent via the first router 35, the Internet 34 and the second router 36 to the second communication device 32. The desired information is contained within the IP-body of the IP-packet.

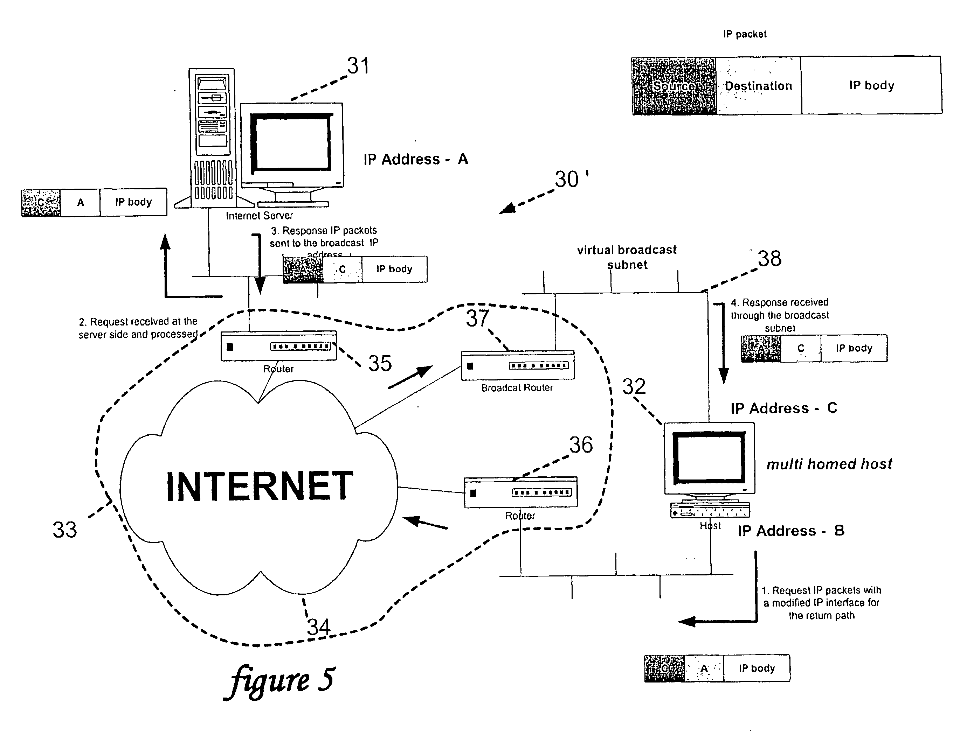

Above-described communication mechanism is state of the art. The communication mechanism as described in Fig. 5 is a modification of this mechanism: a communication system 30' additionally comprises a broadcast router 37 connecting the Internet 34 to a digital broadcast network 38, wherein the second communication device 32 is additionally connected to the digital broadcast network 38.

When sending IP-packets from the second communication device 32 to the first communication device 31 via the second router 36, the Internet 34 and the first router 35, the second communication device has the option of either using the IP-address B or an IP-address C as source IP-address. IP-address B is assigned to a network card connecting the second communication device 32 to the second router 36, whereas the IP-address C is assigned to a network card connecting the second communication device 32 to the digital broadcast system 38.

If the second communication device sends IP-packets having the source IP-address B, response IP-packets sent by the first communication device 31 show the destination IP-address B. If the IP-packets sent by the second communication device 32 show the IP-address C as source IP-address, response IP-packets sent by the first communication device 31 show the destination IP-address C. As a consequence, response IP-packets having the destination IP-address B are routed via the first router 35, the Internet 34 and the second router 36 to the second communication device 32, whereas response IP-packets having the destination IP-address C are routed via the first router 35, the Internet 34 and the broadcast router 37 via the digital broadcast network 38 to the second communication device 32.

This means that the second communication device 32 can influence the way of routing response IP-packets from the first communication device 31 to the second communication device 32.

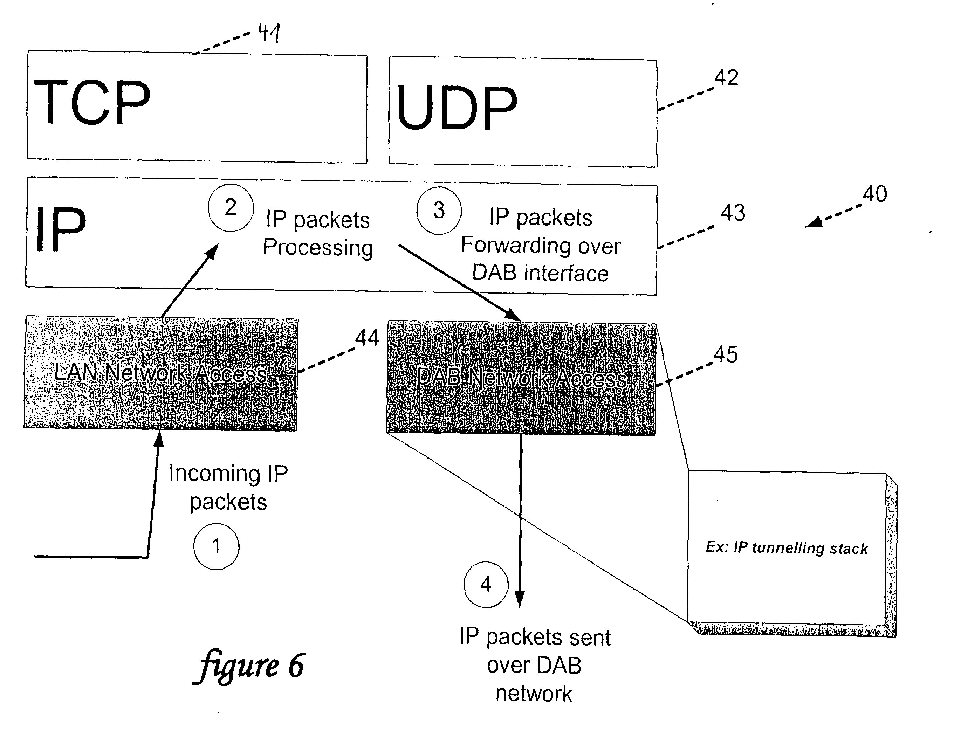

In the following, making reference to Fig. 6, a preferred embodiment of a network accessing layer usable in a broadcast router according to the present invention will be described.

A network accessing layer 40 comprises a TCP layer 41, an UDP layer 42, an IP-layer 43, a LAN-network card 44, and a DAB network card 45. Incoming IP-packets are received by the LAN network card 44 and processed by the IP-layer 43. If the incoming IP-packets have to be sent via a digital broadcast network, the IP-layer 43 routes the IP-packets via the DAB network card 45 to the digital broadcast network. The whole process of managing incoming IP-packets is controlled by the TCP layer 41 and the UDP layer 42.

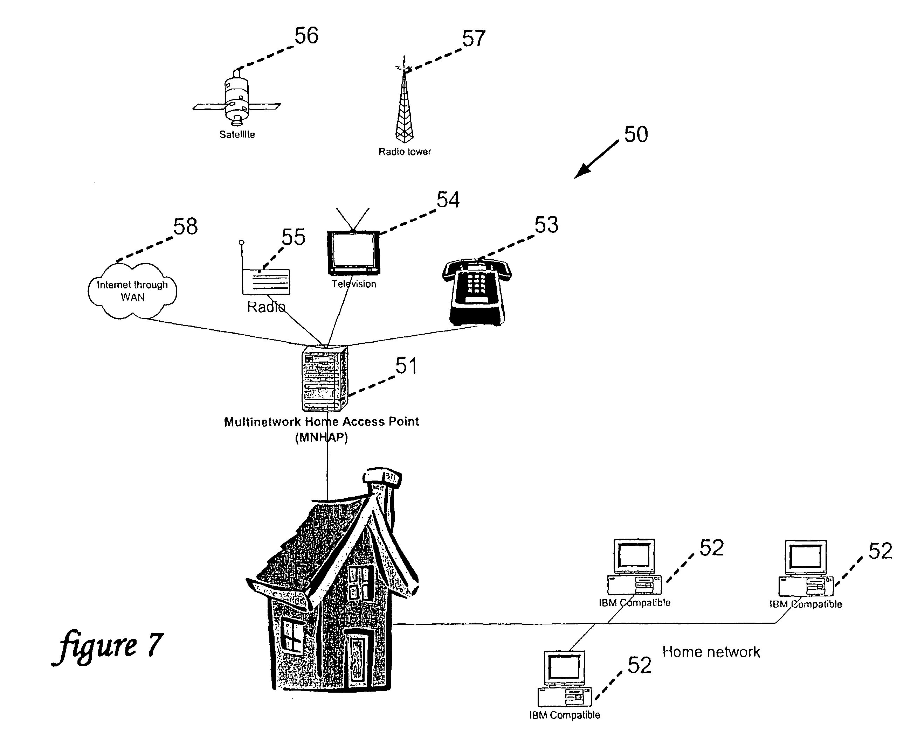

As can be taken from Fig. 7, future home networks 50 may comprise a multi network home access point 51 which manages IP communication between the home network and extern communication networks. The home network may for example comprise personal computers 52, a telephone station 53, a TV set 54, a radio 55, whereas extern communication networks may be fed by a satellite 56, a radio tower 57 or the Internet 58.

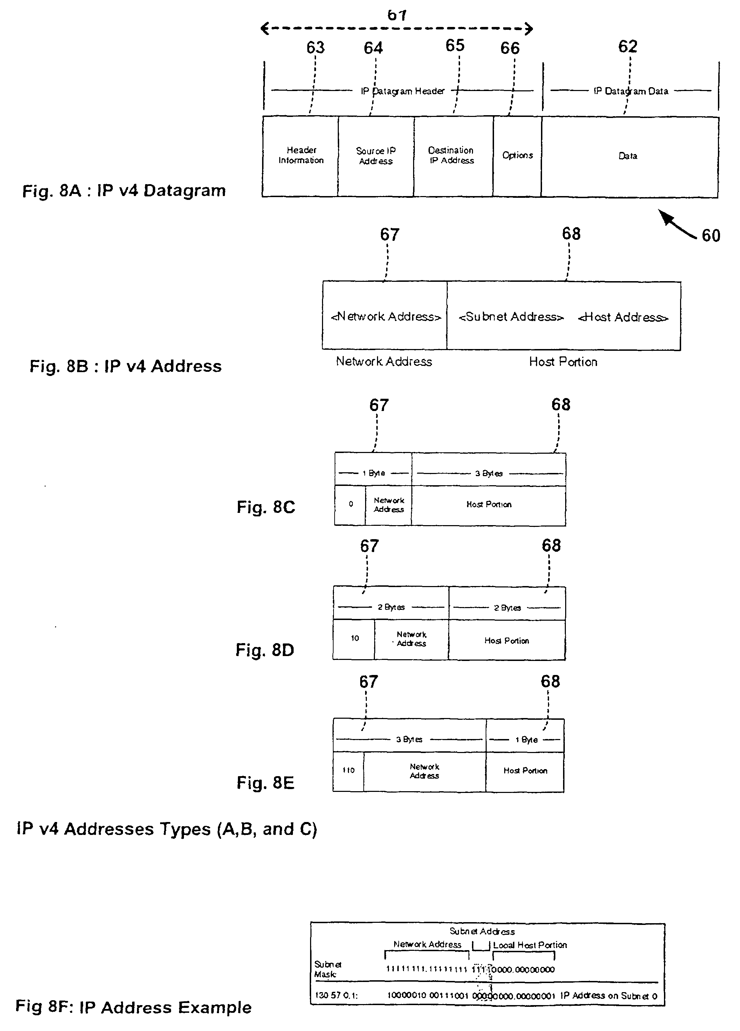

In the following description, making reference to Figs. 8A to 8F, preferred data structures of IP-packets which are used to perform the inventive communication process will be explained.

Fig. 8A shows the data structure of an IP-packet 60 which comprises a header portion 61 and a data portion 62. The header portion 61 comprises a header information block 63, a source IP-address block 64, a destination IP-address block 65 and an options block 66. The actual data which has to be exchanged between communication devices is located within the data portion 62, whereas the header portion 61 mainly comprises routing information.

The general address structure of the source IP-address block 64 and the destination IP-address block 65 are shown in Fig. 8B: Each of the address blocks 64, 65 comprises a network portion 67 containing a network address, and a host portion 68 containing a subnet address and a host address.

Fig. 8C to 8E show respective examples of the general address structure shown in Fig. 8B. Fig. 8C shows an example which uses one byte for the network portion 67 and three bytes for the host portion 68. To indicate this type of address structure, the first bit of the network portion 67 is set to "0". Fig. 8D shows an address structure which uses two bytes for the network portion 67 and two bytes for the host portion 68, wherein this type of address structure is indicated by the first two bits of the network portion 67 which are set to "10". Fig. 8E shows a third possible example of an address structure which uses three bytes to represent the network portion 67 and one byte to represent the host portion 68.

Fig. 8F shows a concrete example of an IP-address which uses the address structure shown in Fig. 8D.

The term "IP-network address parts" used in the claims and the description means in terms of Figs. 8A to 8F parts (or all) of the network address contained in the network portion 67 and/or parts (or all) of the subnet address contained in the host portion 68. The term "IP-host address parts" used in the claims and the description means in terms of Figs. 8A to 8F parts (or all) of the host address which is contained within the host portion 68 and/or parts (or all) of the subnet address which is contained within the host portion 68.

The invention described in the foregoing description can also be presented as follows:

A broadcast digital system is a system that provides a unidirectional digital data stream to a large number of terminals. Such systems are digital radio, wireless digital TV, cable TV, satellite networks, etc. Such a system can be viewed as a virtual broadcast IP computer network (a virtual broadcast network) where the data is broadcast over a common medium to several host PCs or terminals. Specifically, every possible broadcast pipe (that is an independent broadcast digital channel) can be viewed as a virtual broadcast IP subnet, with IP host and network addresses.

The unique transmitter can be viewed as a single router that delivers data to all hosts connected to the virtual subnet (or subnets) and it is in charge to interface different IP networks (LAN, ATM) to the virtual broadcast network (see Fig. 1). Hosts cannot transmit data over this channel (outgoing IP traffic), but they can only receive it (incoming IP traffic). In such a configuration, only preconfigured services can run automatically, due to the impossibility of the host to request and setting up any bi-directional unicast communication. In case of a multi network terminal, their IP networks are used for the outgoing IP traffic.

An IP address is used by the host to address the broadcast interface (IP addresses the physical interface and not the host itself). The mechanisms used to resolve and configure this address are described below.

Whenever another bi-directional (or, as a minimum requirement, an outgoing unidirectional) network is available to the hosts, the system is said in a multihomed configuration (or multihomed host); that is, host terminals have access to N > 1 physical networks (see [8] for more details). One possible configuration is to have every host connected to N > 1 different subnets (broadcast logical subnet and every available bi-directional subnet (GSM, LAN, WLAN)).

In such a configuration, any possible combination of multicast or unicast communication is possible. For a bi-directional communication, it is possible using different combinations of physical channels: IP-packets can be sent over bi-directional (or outgoing unidirectional) networks and can be received over incoming unidirectional (or bi-directional - trivial - or another bi-directional - different from that one used for sending -) networks (see Fig. 2 and Fig. 3).

The redirection of IP-packet over different outgoing and incoming paths is done setting the IP source address (in the host) properly. Normally, the IP source address in the IP packets refers to the physical outgoing IP interface: In the present invention the IP-address inside the outgoing IP-packet is set according the chosen IP incoming interface. Such an approach, as it is displayed in Fig. 3, opens a wide range of new possibilities for optimizing the outgoing/incoming IP traffic in a multi network terminal.

For simulating an IP network subnet in a broadcast medium, we have first of all to derive an IP broadcast network interface address for the specific subnet and all the hosts: In solving this problem, we take into consideration different factors:

- an IP address should be mapped to each host
- location of the IP address mapping database service (on the terminal or on a central repository in the Internet)
- IP network addresses resolution at terminal side and transmitter side.

We will describe two different approaches:

a) a complete automatic IP address resolution algorithm;
b) a DHCP like resolution mechanism using a feedback channel

1. with local IP management (every single virtual IP subnet is managed independently)
2. with centralized IP address management (IP addresses for different virtual IP subnets is managed by a central server).

a) Above, it was mentioned the fact that a broadcast digital network can be viewed as a logical subnet computer network: This can be obtained only if the subnet is identified by an IP address and each host can resolve a unique IP address for their interface. Several mechanisms have been introduced for resolving automatically IP-address in a fixed ([DHCP]) and mobile network [3] using the bi-directional capabilities of mobile network and computer network; a stateless mechanism for resolving address is introduced also for automatically resolving IP address in a local network configuration [4]. The basic mechanism described in the following is trying to resolve the following requirements.

- the mechanism should produce a unique subnet address and unique host address without a bi-directional channel
- the mechanism should be a general algorithm to be used both at the host side and transmitter side automatically
- the unicast host address should be unique (or statistically unique) in a subnet configuration

- the address can be resolved by hardware and software with small resources
- the address should be a function of the physical unique characteristics of the broadcast channel (for example frequency, channels Ids, etc.).

A mechanism is needed to address the IP network ID (also called UP subnet address) and a unique IP address (IP host ID). The network ID is obtained by a unique association between the broadcast digital network parameters:

$$IP \text{ (networks ID)} = g(p1, p2, ...pN)$$

where pi with i = 1 ... N is a unique combination of physical parameters that associates uniquely the digital data stream (for example a DAB ensemble contains unique parameters for identifying the data streams; DVB streams can be addressed inside the MPEG stream using unique parameters, etc.). Any terminal connected to the broadcast medium can automatically calculate the IP network ID. The router that will link the broadcasting system to the Internet (LAN, dial up, etc.) must use the same algorithm to identify the "logical" subnet addressed by the broadcast medium (see Fig. 3).

For solving the host IP, we use a law

$$IP \text{ (Host ID)} = f(IP(\text{Network ID}), t1, t2, ... tN)$$

where t1, ... tN are unique parameters relative to the host terminals (for example MAC address, EUI-48 [16], etc.). Such a law should take into consideration the following requirements:

- the mechanism can give only a limited (very large) set of Ids (broadcast system in theory have infinite user numbers)
- Ids should be unique or statistically unique
- A feedback channel should be needed if we use router control [4].

In case of statistically unique automatic IP addresses we have to deal with possible conflict between hosts addressed with the same IP. In this case, potentially two or more hosts can receive the same IP packets. It is also true that further filtering is done depending on the source of the IP packets (ex the server from which they are requesting data), the upper level protocol IDs (ex TCP or UDP port number), etc.

Depending on the used laws, a certain number of IP subnet address should be reserved for a specific broadcast system. Each subnet should have a certain number of hosts ID to be mapped to each terminal visitor. Moreover, we deduct a certain number of parameters to take into consideration:

- max number of virtual subnet network addresses (network ID)
- max number of virtual subnet host addresses (host ID)
- max number of possible virtual broadcast channel (depending also in the chosen configuration)
- special purpose IP addresses for addressing specific services.

These are important factors for planning the feasibility of such a system.

This core idea of the automatic IP address resolution drives the possibility to do the majority of this calculation by hardware: some examples are introduced in the Etheraction solution [23] for IP tunnelling ([18][6][25]). IP network ID and IP host ID can be calculated automatically by hardware components. In consequence, filtering of the IP packets of interest for the terminals can be done by hardware. Using special null IP packets, the hardware device could collet also the usage of the broadcast channel without interacts with the upper software protocol layers.

b) In case the range of the automatic IP addresses is limited some mechanisms should be introduced to reduce possible conflicts. A centralized DHCP mechanism can be introduced for resolving the IP broadcast addresses. In such a scenario, the terminals or hosts contact (using the feedback channel) a central repository agent that is in charge to resolve or map the IP address to the current broadcast host networks(s) and the hosts.

In this case, two option scenarios can be described:

b.1) The first one is a DHCP-like service that resolves IP addresses for a single virtual IP broadcast subnet. Each virtual IP broadcast subnet has a DHCP-like service that generates the possible IP network address and host addresses. The management in this case is local to the virtual IP broadcast subnet producer (network provider, content provider, etc.). The roaming from one virtual subnet to another is done requesting the new IP address each time a new virtual broadcast IP subnet is encountered.

b.2) The second option is to provide a central repository for group of virtual IP broadcast subnets. The advantage is to have a database repository that can provide information to all the possible virtual IP broadcast subnets. The management can be in this case more flexible in case of roaming between different virtual IP broadcast networks: a terminal can ask for all the mapping "IP address - virtual broadcast IP subnet" of the nearest networks and it can due the roaming automatically.

In both systems, specific protocols can be introduced for communication "hosts-central repository" (extension of DHCP, for example) and transmitter-central repository.

Such a solution is efficient regarding:

- control/reuse of the number of IP addresses
- management of assignment of IP address for avoiding address conflicts
- management roaming among DAB network areas
- only authorized machine can receive IP addresses.

Other mechanisms can be used, for example:

a. IP session token (extension of the IP headers)
b. Time stamps
c. etc.

A very important component of the architecture we are describing is the router (See router definition in the IP protocol suite (*)). A router is a multihomed host in which the IP traffic is routed to the proper subnets.

(*) "On the Internet, a router is a device or, in some cases, software in a computer, that determines the next network point to which a packet should be forwarded toward its destination. The router is connected to at least two networks and decides which way to send each information packet based on its current understanding of the state of the networks it is connected to. A router is located at any gateway (where one network meets another), including each Internet point-of-presence. A router is often included as part of a network switch.

A router may create or maintain a table of the available routes and their conditions and use this information along with distance and cost algorithms to determine the best route for a given packet. Typically, a packet may travel through a number of network points with routers before arriving at its destination. Routing is a function associated with the network layer (layer 3) in the standard model of network programming, the Open Systems Interconnection (OSI) model. A layer-3 switch is a switch that can perform routing functions."

In the system described above, a broadcast router will route IP traffic addressed to the logical IP subnet over the broadcast channel (see following section for a detailed case). In Fig. 4 and Fig. 5, you can see the routing of an IP packet in a normal case (4) and in a multihomed configuration with broadcast medium (5).

The broadcast router is an IP router with a physical interface with traditional IP network and one or more broadcast media [26] (or logical broadcast subnet). Such a router mainly behaves as a normal IP router, with all the necessary services activated: route the IP traffic from one IP network to the others, and in case of IP multicast, deals with specific IP layer functionalities (see Fig. 6).

Different types of IP traffic are available on a virtual broadcast IP subnet:

a. DAB IP multicast: as defined in [IP over DAB], broadcasters can deliver multicast stream over DAB using the IP protocol;
b. IP multicast: one or more host in the virtual broadcast IP subnet can register for multicast stream;
c. IP unicast: IP traffic direct to any host in the virtual broadcast IP subnet;
1. IP management traffic.

The first one is defined in [IP over DAB [6][15]] and generally is produced by the DAB content providers; the second and third one is IP traffic redirected over the broadcast medium in a multihomed configuration. The last one is the IP traffic used for managing the virtual broadcast IP subnet; such an IP traffic is very important for having a complete compatibility with the IP networks.

Normally, broadcast systems have a limited coverage area (from few square km to thousands of square km). In the particular case of wireless broadcast media, users can move from one cell to the others. Mobile IP [2] tries to solve the problem of mobile phone cell. Mobile IP derives similarly from the mobile phone roaming mechanism: a user registers him/herself to a network provider; whenever the user is moving to a foreign network (roaming) a centralized database is updated with the current location and the phone call are forwarded to the visiting network. The system is basically the same in Mobile IP, but with home agent and foreign agent systems. A broadcast network has not implicitly a concept of home host and foreign host, neither the concept of home agent and foreign agent. Each terminal is using the any available broadcast The mobile phone system is more suitable for a subscribe home-foreign agent model, because the mobile phone users subscribe to a certain network provider; in a broadcast mobile system, terminals use the network resources without subscribing explicitly to any entities (except the satellite encrypted channel). For example, walkman access the radio resource wherever they are.

According to the present invention, a broadcast mobile host will change automatically its IP address moving from one cell to the other using the mechanism described in the above sections: optionally, some mechanisms could be needed to notify the broadcast router to discard IP packet destined to host moved away from the cell. In this case, different solutions are presented to solve this problem [2]: in case of a bi-directional network, the host can notify the router of its leaving, or the router can delete the entries depending on timeouts [see RFC1971].

Terminals can move from one cell to the other in a wireless broadcast system. Depending on the nature of the application, some problems can arise: IP packets do not reach any longer the target terminals, TCP session cannot be maintained, etc. Different solutions can be applied for reducing the failure to the higher protocol layers (TCP, UDP, HTTP). We distinguish for that reason different types of traffic:

- stream-oriented (RSP)
- command-oriented (HTTP, FTP, TELNET).

For stream-oriented services, a more sophisticated solution is needed. The system may change transparently to other alternative paths without stopping the stream. For the command-oriented protocols, the missing of some packet at the IP layer immediately produce a retransmission of a request; the retransmission should be routed to other available networks. Using some standard protocols (ICMP) is possible to notify to the upper layer protocol that some errors occurred.

The protocol architecture of a multihomed terminal is similar to that one of a traditional IP host, except for the following points:

- The IP layer protocol has to deal with more than one network access (LAN, WLAN, DAB, etc.)
- Smart routing strategies are applied for the delivery of the outgoing and incoming IP traffic
- Support for special protocols (if needed) for managing the broadcast media at the IP layer.

The multihomed terminal has knowledge of all the possible IP networks. This is a fundamental point of difference to the proposed IP over DAB/DVB-T solutions: the Internet traffic over broadcast media is semi-transparently managed by special purpose component (see [IP over DAB]).

For managing the IP traffic over a broadcast medium, some special services are needed: for example if some authentication is needed to access or allocate resources, some medium specific control has to be implemented. Such a service can be implemented as extended services at the router side or by special server host in the subnet (implemented at the transmission side). The possible usage of such "server" should be transparent to the IP network framework; for that reason it can be useful to allocate a subnet of automatic generated IP address for addressing such a problem. The goal is always to provide a seamless environment where only IP based mechanisms are used in a transparent way: such requirements allow producing a full open system.

By nature IP traffic is packet based. Normally, broadcast channels are stream-oriented. In such situation, different possibilities can arise: the broadcast channel is adapted dynamically to the amount of IP traffic needed; a packet mode solution is used and other type of data is multiplexed with the IP traffic; a fixed amount of bandwidth is allocated to the IP traffic, but some IP null packets are sent to pad the needed data. In all these cases, some statistic can be deducted for the use of the IP channel; such statistics can be used as a measure of the capabilities of the broadcast channel and it can be used for redirecting to other IP media the IP traffic of the multihomed terminals.

In such a system, several issues are opened in case of security. Authorization mechanism to use broadcasting resources is needed for not reducing the overall performance, in fact the broadcast incoming IP traffic can be filtered depending on the authorized users; in some circumstances some denial of service attack can be done sending IP traffic of non-existent broadcast users, etc. Such problems can be solved introducing control mechanisms over a bi-directional channel (a multihomed configuration) using specific mechanism addressed in IPv6 architecture. Some specific security and authorization mechanism can be introduced in case of specific network (ex. DAB as described in [17]).

Authorization to access the broadcast resources can be done using mechanism specific of the broadcast media (CA in DAB, encryption of service components, etc). Registration to use the broadcast media resources or allocation of such resource can be done with specific protocols/services implemented in the broadcast router. For example, whenever a host wants to use a broadcast channel for unicast IP or multicast IP traffic must register its IP and provide its identity (IP security). After registration, the broadcast router can control the quota of IP traffic for each specific host.

The architecture described in the above section can be implemented in both IP architecture versions 4 and 6.

IPv6: In the release 4 of the IP protocol it can be difficult to find enough IP addresses (32 bit) for managing each specific broadcasting system. Basically, the network and host ID structure in IPv4 is the basic element for implementing such a system. Further extensions to the router services (ICMP, etc.) can be needed.

IPv6: release 6 of the IP protocol provides a very large range of IP addresses, and a very large number of bits (128) for addressing each specific network interface.

Some specific extensions used in Mobile IP [Mobile IP] for managing the registering in a foreign subnet of mobile terminals can be used also in the broadcast solution.

DAB stands for Digital Audio Broadcast and it is a wireless broadcast system to deliver digital data to mobile and fixed terminal (see [17]).

a. Address Resolution with DAB parameters

In the DAB system, you can create virtual broadcast IP subnets associating a virtual broadcast IP subnet to different physical digital streams:

- a virtual broadcast IP subnet for each ensemble (Ensemble ID and country ID as unique parameters p1 and p2); the IP channel can be a fixed DAB subchannel (for example the subchannel 63)
- a virtual broadcast IP subnet for different DAB subchannels inside a single ensemble (Ensemble ID, country ID, subchannel ID)
- an ensemble with a unique DAB subchannel only for IP traffic (1,5 Mbit/s)
- combination of DAB subchannels for automatic allocation of bandwidth
- PAD or NPAD services signalled by FIG0/13 parameter, etc.

The host IP can be resolved using MAC address or EUI numbering for the terminals [16]. The problem in a broadcast system as DAB is that the number of potential users is infinite. Playing with the size of the above-described parameters and with the size of the DAB coverage cell, it is possible to obtain very large IP interfaces numbers. With ID of 16,32 or 64 bit, we can obtain very large numbers of possible IP interfaces. In case of multihomed configuration with an available bi-directional channel, the broadcast router can be used to check the unicity of the produced IP interface address using know mechanisms (see [4]). How to transmit the IP packet over the DAB system is covered in [18] and [6].

b. Security and Authentication using DAB CA mechanism

In the DAB standard, it is possible to use the Conditional Access (CA) mechanism to protect the access of some transmitted contents. Such a mechanism can be used to control the decoding of specific DAB subchannel that can be used for IP traffic (as explained above). Such a solution can guarantee only the control to the transmitted resource, but it cannot avoid denial of service attack.

Using IPv6 security, it is possible to introduce more general security mechanism for the access to resources (see [4]).

A DRM system is the digital evolution of AM analog radio system. In the future, using a very narrow spectrum (10 KHz) it will be possible to allocated digital stream or packets of data/audio. Although the tiny bandwidth, the DRM system has big advantages in terms of cell size (hundreds of square Km) and user scalability. IP Address resolution over DRM services: inside a DRM digital stream is possible to address up to 4 separate streams. Each stream is identified by specific Ids. It is also possible to signal the nature of the content transmitted. Such possibilities are the basic elements for creating DRM broadcast IP subnets.

The DVB system is a digital system for broadcasting over satellite (DVB-S), cable (DVB-C) or wireless (DVB-T) a large bandwidth MPEG video stream. Such a system has also the capabilities to deliver data stream for data application (see [24]). In such a system, it is possible to identify the digital stream using a collection of identifiers: this opens the possibility to apply the solution described in this report of invention. Virtual broadcast DVB IP subnet can be produced for delivering unidirection ingoing IP packet traffic to mobile or fixed terminals.

An MNHAP (Multi Network Home Access Point) is a special home router that allows to connect the home subnet to a large number of physical and virtual broadcast IP subnets. Its main task is to dispatch the outgoing IP traffic from the home network to the optimal path. At home in the future, we will have different kind of network devices (digital radio, digital TV, LAN, WLAN, optical cable, etc): a MNHAP will implement all the possible routing optimization for the IP traffic from the home hosts to the external IP networks (see Fig. 7).

A combination of DAB and GPRS wireless system is a very efficient way to provide an IP network to a very large rural area. IP traffic between hosts in a client/server configuration is by nature asymmetric: the communication between client and server usually has a lower bandwidth respect to a server/client communication. For example, a URL request to an HTTP server produces a series of transmission of pictures, texts, audio toward the client. GPRS channels can provide a packet based outgoing IP traffic channel for terminals, while the DAB network can provide a very efficient incoming IP traffic. The basic components of such a system are:

- A multihomed terminal provided by a GPRS access and by a DAB tuner;
- A GPRS/Internet router to route the IP traffic on Internet network;
- A DAB/Internet router to broadcast the IP traffic to terminals.

In the following a case representing a more straight forward realization of a multihomed host with radio and LAN access is discussed. The fixed network reduces the complexity of the system and provides always a control path to coordinate the virtual broadcast IP subnet. In this case, a fixed PC station with both a PC LAN card and a DAB receiver can provide a platform for implementing the system described in the report of invention. The overall introduced model is in this case very simple for the following reason:

- a DAB-IP connection is always available as far as the DAB signal is not switched off at the station side
- a feedback path is always available as far as the LAN card is properly working
- no mobility problems can arise because the station is not mobile.

The station can be used as a host machine or as a Multi Network Home Access Point.

A second alternative approach can be introduced to map a broadcast resource to an IP network. In the previous sections, we have introduced a virtual broadcast IP subnet with network and host IP addresses. Another solution can be obtained using a unique IP address for each broadcast digital pipe, that is only one specific broadcast IP address is associated to the broadcast pipe relative to the covered cell. All the terminals that receive the signal share the same IP address. In this case only a unique IP address is calculated (using the mechanisms introduced in the previous sections) and shared by all the possible broadcast terminals. Communication directed to specific terminals is performed using other mechanisms. In fact, unicast communication is performed using special "host" token ID: Such a token ID can be implemented using different mechanisms (for example with extra IP attributes, etc.). In this case, the number of IP addresses is reduced extremely: The IP host addresses are substituted by another ID mapping mechanism. The switching IP technique can be applied also in this case: Once the IP traffic reaches the broadcast router (addressed using the unique IP address), further demultiplexing of the IP traffic for every host is done using other addressing schemes.

As has become apparent, the present invention provides a general architecture for solving the problem of integrating seamlessly a digital wireless broadcast medium (ex: DAB, DVB-T, DRM) to an IP network. New mechanisms are introduced and recent developed concepts [Mobile IP] are reused in a new context.

The following problems are solved by the present invention:

- efficient bandwidth usage in case of a multi IP network with broadcast media
- the problem of best connection for mobile devices able to access a multi network mobile system and broadcast system
- the management of mobility inside a broadcast medium using IP (roaming)
- allow different kind of IP traffic on an IP based broadcast system: broadcast, multicast and unicast
- IP address resolution in a broadcast media
- A multihomed configuration of the IP stack for both host machine and router
- An IP redirection mechanism (Switching IP) in case of multi networks terminal (broadcast media and bidirectional access).

Openness is a basic requirement. Openness means to provide an IP network access as it is provided by the current IP network architecture and described in the RFCs; no specific system should be used except components already specified in the IP network architecture. Moreover, current available protocols and structure defined for IP network with very small adaptations or extensions are used. The solution also covers the case in which a mobile terminal is connected to a fixed network and it does not change location (ex: a home TV/ radio connected via LAN or modem).

The architecture described can be used for multicast communication in a terminal with only broadcast access or additionally for unicast communication with the terminal in an IP multihomed configuration [8] [9].

To use one or more broadcast media as IP transport media, it is advantageous to use a dynamic IP-protocol stack as described in the applicants parallel European patent application "Method for performing TCP/IP based communication over a multiple IP-network system" submitted on the same day as this application, which content is herewith included into this application.

**Glossary**

**Virtual IP Broadcast Subnet.** A broadcast channel or subchannel, after applying the mechanism described in this patent (address resolution, IP multihomed host, etc.) can be seen as a virtualized broadcast IP subnet (a collection of host machine with IP interface addresses). The term virtual is used because the IP subnet is obtained adapting a broadcast medium to the IP architecture (IP host addresses, network IP addresses, broadcast router, etc): the broadcast medium is transformed to an IP network, although in the broadcast medium there is not explicit support for such transformation.

**Multihomed Host.** A multihomed host is a terminal connected to more than one IP interface network. A router is a particular multihomed host, in the sense that provide network mechanism to forward IP packet to different IP network. (see [8],[9] for more details)

**DHCP like service.** A DHCP like service is a server application that provides IP address management for an IP subnet. DHCP is a standard solution for PC IP subnet management; in the case of a virtual IP broadcast subnet, we would need specific extensions of such a system.

**DAB.** Digital Audio Broadcasting: a digital standard for audio broadcasting.

**DVB.** Digital Video Broadcasting: a standard for digital video broadcasting.

**DRM.** Digital Radio Mondiale: a standard for digital radio for long range waves.

**DR.** Digital Radio: sometimes this term is used for addressing all the new digital standard for audio broadcasting (DAB, DRM, digital FM).

**GSM.** Global System for Mobile Communication

**GPRS.** General Packet Radio Service

**WLAN.** Wireless Local Area Network

**LAWN.** Local Area Wireless Network

**Switching IP.** This is the name of the technique applied to redirect the outgoing IP traffic through an IP interface to another incoming IP interface.

REFERENCES

1. US Patent 5,159,592 (Perkins) - October 27, 1992

2. Mobile Networking Through Mobile IP by Charles E. Perkins (http://computer.org/internet/v2n1/perkins.htM)

3. RFC 2002, IP Mobility Support (C. Perkins)

4. RFC 1971 - IPv6 Stateless Address Autoconfiguration (ftp://ftp.isi.edu/in-notes/rfc1971.txt)

5. RFC 2463 Internet Control Message Protocol (ICMP) for Internet Protocol Version 6 (ftp:/ftp.isi.edu/in-notes/rfc2463.txt)

6. Method for requesting and transferring information in a digital audio broadcasting system (PN: WO9914775- 1999-03-25 - Routtinen, Karlsson, Ossfeldt)

7. IP/DVB (http://www.erg.adbn.ac.uk/users/gorry/ip-dvb/)

8. United States Patent, Method and apparatus for TCP-IP multi homing on a host system configured with multiple independent transport provider system (PN:6,119,170 Sep. 12, 2000)

9. United States Patent, Multihomed end system for increasing computers network bandwidth (PN: US60646671 - Kilian)

10. Multihomed Host Support in IPv6 (http://onoe2.sm.sony.co.ip/ipv6/id/draft-shand-ipv6-multi-homing-01.txt)

11. The challenges of seamless Handover in future mobile multimedia networks by Larry Taylor, Richard Titmuss

12. DRIve (http://www.ist-drive.org/)

13. COMCAR (http://www.comcar.de/)

14. WebAnywhere (http://www.webanywhere.n1/index_e.htm)

15. MCP (Multimedia Car Platform) (http:/mcp.fantastic.ch/)

16. Guidelines for use of the EUI-48 (http://standrards.ieee.org)

17. DAB Specification - EN 300 401 V1.3.3 (May 2001) - ETSI standard

18. TS 101 735 V1.1.1 Digital Audio Broadcasting (DAB); Internet Protocol Datagram Tunneling

19. DRM Digital Radio Mondiale (http://www.drm.org)

20. ETSI TS 101 980 V1.1.1 (2001-09) - Digital Radio Mondiale (DRM); System Specification

21. MEMO Project (http://www.eurescom.de/-ftproot/web-deliverables/public/P1000-series/P1046/T1/MEMO/)

22. TCP-IP architecture for windows

23. Etheraction DAB iPAQ module architecture (http://www.etheraction.com/)

24. DVB system (http://www.dvb.org/http://www.dvb.org/dvb_technology/framesets/standspec-fr.

html)

25. Hybrid Networks - A Step Beyond 3G (Rod Wa1sh1, LinXu2, Toni Paila) - from the DriVe Project

26. IP Router Architectures: An Overview (James Aweya) (http://citeseer.nj.nec.com/432651.html)

27. ES 201 736 V1.1.1 Digital Audio Broadcasting (DAB); Network Independent Protocols for Interactive Services

28. ES 201 737 V1.1.1 Digital Audio Broadcasting (DAB); DAB Interaction Channel through GSM/PSTN/ISDN/DECT

29. RFC 1825 - Security Architecture for the Internet Protocol

**Claims**

1. Method of communicating between a first and a second communication device (31, 32) which are linked with each other via a communication network (33),
wherein said first and said second second communication device (31, 32) are at least connected to an IP-network (34) and a digital wireless broadcast network (38) being parts of said communication network (33), respectively, comprising the following steps:

   - assigning virtual IP-subnets and corresponding virtual IP-network address parts to said digital wireless broadcast network and/or parts thereof and/or services offered via said digital broadcast network,
   - assigning a virtual IP-host and a corresponding virtual IP-host address part to said second communication device,
   wherein, in order to transfer information from said second communication device (32) to said first communication device (31),

      a) information is encapsulated into IP-packets comprising an IP-network address part and an IP-host address part assigned to said first communication device (31), respectively,
      b) said IP-packets are sent to said first communication device (31) using said IP-network, wherein said second communication (32) device uses said virtual IP-network address part and said virtual IP-host address part assigned to said second communication device or an IP-network address and an IP-host address part assigned to said second communication device as IP source address when sending IP-packets via said IP-network (34) to said first communication device (31),

   - wherein, in order to transfer information from said first communication device (31) to said second communication device (32),

      a) information is encapsulated into IP-packets comprising the IP-source address contained in IP-packets received from said second communication device (32).
      b) said IP-packets are broadcast via said digital wireless broadcast network (38) if said IP-source address corresponds to said said virtual IP-network address part and said virtual IP-host address part of said second communication device, or are sent via said IP-network (34) to said second communication device (32) if said IP-source address corresponds to said said IP-network address part and said IP-host address part assigned to said second communication device.

2. Method according to claim 1, **characterized by** determining said virtual IP-network address parts according to a first algorithm which creates said virtual IP-network address parts in dependence of physical parameters being representative for said digital wireless broadcast network (38) and/or parts thereof and/or services offered via said digital wireless broadcast network (38), respectively.

3. Method according to claim 1 or 2, **characterized by** determining said virtual IP-host address part according to a second algorithm which creates said virtual IP-host address part in dependence of physical parameters being representative for said second communication device (32) or parts thereof.

4. Method according to claim 3, **characterized in that** said first and second algorithm run in said second communication device (32).

5. Method according to claim 1, **characterized in that** the process of generating said virtual IP-network address parts/virtual IP-host address part is managed by a central IP-address database being located within said communication network (33), said central IP-address database supplying free IP-address parts when being contacted by said second communication device (32).

6. Method according to anyone of claims 1 to 5, **characterized by** using a broadcast router (37) being connected to said first communication device (31) and said digital wireless broadcast network (38) to route IP-packets which comprise said virtual IP-network address parts and which have been received from said first communication device (31) via said digital wireless broadcast network (38) to said second communication device (32).

7. Method according to claim 6. **characterized in that** said first algorithm are run in said broadcast router (37).

8. Method according to anyone of claims 1 to 7, **characterized in that** said virtual IP-network address parts are assigned to DAB subchannels and/or DRM services.

9. Communication system (1), comprising:

a first communication device (31) and a second communication device (32) being connectable to an IP-network and a digital wireless broadcast network, respectively,
- means for assigning virtual IP-subnets and corresponding virtual IP-network address parts to said digital wireless broadcast network (38) and/or parts thereof and / or services offered via said digital wireless broadcast network, respectively,
- means for determining a virtual IP-host address part being representative for said second communication device (32),
- a communication network (33) connecting said first communication device (31) with said second communication device (32), said communication network (33) comprising said IP-network (34) and said digital wireless broadcast network (38),
- wherein, in order to transfer information from said second communication device (32) to said first communication device (31),

a) information is encapsulated into IP-packets comprising an IP-network address part and an IP-host address part assigned to said first communication device (31), respectively,
b) said IP-packets are sent to said first communication device (31) using said IP-network, wherein said second communication (32) device uses said virtual IP-network address part and said virtual IP-host address part assigned to said second communication device or an IP-network address and an IP-host address part assigned to said second communication device as IP source address when sending IP-packets via said IP-network (34) to said first communication device (31),

- wherein, in order to transfer information from said first communication device (31) to said second communication device (32).

a) information is encapsulated into IP-packets comprising the IP-source address contained in IP-packets received from said second communication device (32).
b) said IP-packets are broadcast via said digital wireless broadcast network (38) if said IP-source address corresponds to said said virtual IP-network address part and said virtual IP-host address part of said second communication device, or are sent via said IP-network (34) to said second communication device (32) if said IP-source address corresponds to said said IP-network address part and said IP-host address part assigned to said second communication device.

10. Communication system (1) according to claim 9, **characterized by** a broadcast router (37) said broadcast router connecting said first communication device (31) to said digital wireless broadcast network (38), said broadcast router (37) comprising means for:

- assigning virtual IP-subnets and corresponding virtual IP-network address parts to said digital wireless broadcast network (38) and/or parts thereof and/or services offered via said digital wireless broadcast network, respectively.
- routing IP-packets which comprise said virtual IP-network address parts and which have been received from said IP-network into said digital wireless broadcast network (38).

11. Communication system (1) according to claim 9 or 10, **characterized in that** said IP-network (34) is the Internet directly connecting said first communication device (31) with said second communication device (32).

12. Communication system (1) according to claim 10, **characterized in that** said broadcast router (37) connects the Internet (34) to said digital wireless broadcast network (38).

13. Communication system (1) according to anyone of claims 9 to 12, **characterized in that** said virtual IP-network address parts are creatable in dependence of physical parameters being representative for said digital wireless broadcast network (38) and/or parts thereof and/or services offered via said digital wireless broadcast network, respectively, whereas said virtual IP-host address part is creatable in dependence of physical parameters being representative for said communication device (32).

14. Communication system (1) according to anyone of claims 9 to 13, **characterized in that** said second communication device (32) comprises means for determining to which networks said communication device (32) is currently connected.

15. Computer program product comprising computer program means adapted to perform the method according to claims 1 to 8 when it is executed on a computer, a digital signal processor or the like.

16. Computer readable storage means adapted to store a computer program product according to claim 15.

**Patentansprüche**

1. Verfahren zur Kommunikation zwischen einer ersten und einer zweiten Kommunikationsvorrichtung (31, 32), die über ein Kommunikationsnetz (33) miteinander verbunden sind, wobei die erste und die zweite Kommunikationsvorrichtung (31, 32) zumindest mit einem IP-Netz (34) und einem digitalen Funk-Übertragungsnetz (38), die jeweils Teile des Kommunikationsnetzes (33) sind, verbunden sind, mit den folgenden Schritten:

   - Zuweisen virtueller IP-Unternetze und entsprechender Virtuelles-IP-Netz-Adressteile zum genannten digitalen Funk-Übertragungsnetz und/oder Teilen desselben und/oder Diensten, die über dieses digitale Funk-Übertragungsnetz angeboten werden;
   - Zuweisen eines virtuellen IP-Hosts und eines entsprechenden Virtueller-IP-Host-Adressteils zur zweiten Kommunikationsvorrichtung;
   - wobei, um Information von der zweiten Kommunikationsvorrichtung (32) an die erste Kommunikationsvorrichtung (31) zu übertragen,

      (a) Information in IP-Pakete gekapselt wird, die einen IP-Netz-Adressteil und einen IP-Host-Adressteil enthalten, die jeweils der ersten Kommunikationsvorrichtung (31) zugewiesen sind;
      (b) die IP-Pakete unter Verwendung des IP-Netzes an die erste Kommunikationsvorrichtung (31) gesendet werden, wobei die zweite Kommunikationsvorrichtung (32) den Virtuelles-IP-Netz-Adressteil und den Virtueller-IP-Host-Adressteil, wie sie der zweiten Kommunikationsvorrichtung zugewiesen sind, oder eine IP-Netzadresse und einen IP-Host-Adressteil, wie sie der zweiten Kommunikationsvorrichtung zugewiesen sind, als IP-Quelladresse verwendet, wenn sie IP-Pakete über das IP-Netz (34) an die erste Kommunikationsvorrichtung (31) sendet;

   - wobei, um Information von der ersten Kommunikationsvorrichtung (31) an die zweite Kommunikationsvorrichtung (32) zu übertragen;

      (a) Information in IP-Pakete gekapselt wird, die die IP-Quelladresse enthalten, wie sie in von der zweiten Kommunikationsvorrichtung (32) empfangenen IP-Paketen enthalten ist;
      (b) die IP-Pakete über das digitale Funk-Übertragungsnetz (38) übertragen werden, wenn die IP-Quelladresse dem Virtuelles-IP-Netz-Adressteil und dem Virtueller-IP-Host-Adressteil der zweiten Kommunikationsvorrichtung entspricht, oder sie über das IP-Netz (34) an die zweite Kommunikationsvorrichtung (32) gesendet werden, wenn die IP-Quelladresse dem IP-Netz-Adressteil und dem IP-Host-Adressteil, die der zweiten Kommunikationsvorrichtung zugewiesen sind, entspricht.

2. Verfahren nach Anspruch 1, **gekennzeichnet durch** das Bestimmen der Virtuelles-IP-Netz-Adressteile entsprechend einem ersten Algorithmus, der diese abhängig von physikalischen Parametern erzeugt, die für das digitale Funk-Übertragungsnetz (38) und/oder Teile desselben und/oder Dienste, wie sie **durch** dasselbe angeboten werden, erzeugt.

3. Verfahren nach Anspruch 1 oder 2, **gekennzeichnet durch** das Bestimmen des Virtueller-IP-Host-Adressteils entsprechend einem zweiten Algorithmus, der diesen abhängig von physikalischen Parametern erzeugt, wie sie für die zweite Kommunikationsvorrichtung (32) oder Teile derselben repräsentativ sind.

4. Verfahren nach Anspruch 3, **dadurch gekennzeichnet, dass** der erste und der zweite Algorithmus in der zweiten Kommunikationsvorrichtung (32) ablaufen.

5. Verfahren nach Anspruch 1, **dadurch gekennzeichnet, dass** der Prozess zum Erzeugen der Virtuelles-IP-Netz-Adressteile/des Virtueller-IP-Host-Adressteils durch eine zentrale Datenbank für IP-Adressen verwaltet wird, die sich innerhalb des Kommunikationsnetzes (33) befindet, wobei diese zentrale Datenbank für IP-Adressen freien IP-Adressteile liefert, wenn die zweite Kommunikationsvorrichtung (32) Kontakt mit ihr aufnimmt.

6. Verfahren nach einem der Ansprüche 1 bis 5, **gekennzeichnet durch** die Verwendung eines Übertragungsrouters (32), mit der ersten Kommunikationsvorrichtung (31) und dem digitalen Funk-Übertragungsnetz (38) verbunden ist, um IP-Pakete, die die Virtuelles-IP-Netz-Adressteile enthalten und von der ersten Kommunikationsvorrichtung (31) empfangen wurden, über das digitale Funk-Übertragungsnetz (38) an die zweite Kommunikationsvorrichtung (32) weiterzuleiten.

7. Verfahren nach Anspruch 6, **dadurch gekennzeichnet, dass** der erste Algorithmus im Übertragungsrouter (37) läuft.

8. Verfahren nach einem der Ansprüche 1 bis 7, **dadurch gekennzeichnet, dass** die Virtuelles-IP-Netz-Adressteile DAB-Unterkanälen und/ oder DRM-Diensten zugewiesen werden.

9. Kommunikationssystem (1) mit:

   - einer ersten Kommunikationsvorrichtung (31) und einer zweiten Kommunikationsvorrichtung (32), die mit einem IP-Netz bzw. einem digitalen Funk-Übertragungsnetz verbindbar sind;
   - einer Einrichtung zum Zuweisen virtueller IP-Unternetze und entsprechender Virtuelles-IP-Netz-Adressteile zum digitalen Funk-Übertragungsnetz (38) und/oder Teilen desselben und/oder Diensten, wie sie durch dieses angeboten werden;
   - einer Einrichtung zum Bestimmen eines Virtueller-IP-Host-Adressteils, der für die zweite Kommunikationsvorrichtung (32) repräsentativ ist;
   - einem Kommunikationsnetz (33), das die erste Kommunikationsvorrichtung (31) mit der zweiten Kommunikationsvorrichtung (32) verbindet und über das genannte IP-Netz (34) und das genannte digitale Funk-Übertragungsnetz (38) verfügt;
   - wobei, um Information von der zweiten Kommunikationsvorrichtung (32) an die erste Kommunikationsvorrichtung (31) zu übertragen,

     (a) Information in IP-Pakete gekapselt wird, die einen IP-Netz-Adressteil und einen IP-Host-Adressteil enthalten, die jeweils der ersten Kommunikationsvorrichtung (31) zugewiesen sind;
     (b) die IP-Pakete unter Verwendung des IP-Netzes an die erste Kommunikationsvorrichtung (31) gesendet werden, wobei die zweite Kommunikationsvorrichtung (32) den Virtuelles-IP-Netz-Adressteil und den Virtueller-IP-Host-Adressteil, wie sie der zweiten Kommunikationsvorrichtung zugewiesen sind, oder eine IP-Netzadresse und einen IP-Host -Adressteil, wie sie der zweiten Kommunikationsvorrichtung zugewiesen sind, als IP-Quelladresse verwendet, wenn sie IP-Pakete über das IP-Netz (34) an die erste Kommunikationsvorrichtung (31) sendet;

   - wobei, um Information von der ersten Kommunikationsvorrichtung (31) an die zweite Kommunikationsvorrichtung (32) zu übertragen;

     (a) Information in IP-Pakete gekapselt wird, die die IP-Quelladresse enthalten, wie sie in von der zweiten Kommunikationsvorrichtung (32) empfangenen IP-Paketen enthalten ist;
     (b) die IP-Pakete über das digitale Funk-Übertragungsnetz (38) übertragen werden, wenn die IP-Quelladresse dem Virtuelles-IP-Netz-Adressteil und dem Virtueller-IP -Host-Adressteil der zweiten Kommunikationsvorrichtung entspricht, oder sie über das IP-Netz (34) an die zweite Kommunikationsvorrichtung (32) gesendet werden, wenn die IP-Quelladresse dem IP-Netz-Adressteil und dem IP-Host-Adressteil, die der zweiten Kommunikationsvorrichtung zugewiesen sind, entspricht.

10. Kommunikationssystem (1) nach Anspruch 9, **gekennzeichnet durch** einen Übertragungsrouter (37), der die erste Kommunikationsvorrichtung (31) mit dem digitalen Funk-Übertragungsnetz (38) verbindet und Einrichtungen für Folgendes aufweist:

   - Zuweisen virtueller IP-Unternetze und entsprechender Virtuelles-IP-Netz-Adressteile zum genannten digitalen Funk-Übertragungsnetz (38) und/oder Teilen desselben und/oder Diensten, wie sie von diesem angeboten werden;
   - Weiterleiten von IP-Paketen, die die genannten virtuelles-IP-Netz-Adressteile enthalten und vom IP-Netz empfangen wurden, in das digitale Funk-Übertragungsnetz (38).

11. Kommunikationssystem (1) nach Anspruch 9 oder 10, **dadurch gekennzeichnet, dass** das IP-Netz (34) das Internet ist, das die erste Kommunikationsvorrichtung (31) direkt mit der zweiten Kommunikationsvorrichtung (32) verbindet.

12. Kommunikationssystem (1) nach Anspruch 10, **dadurch gekennzeichnet, dass** der Übertragungsrouter (37) das Internet (34) mit dem digitalen Funk-Übertragungsnetz (38) verbindet.

13. Kommunikationssystem (1) nach einem der Ansprüche 9 bis 12, **dadurch gekennzeichnet, dass** die Virtuelles-IP-Netz-Adressteile abhängig von physikalischen Parametern erzeugbar sind, die für das digitale Funk-Übertragungsnetz (38) und/oder Teile desselben und/oder von diesem angebotene Dienste jeweils repräsentativ sind, wobei der Virtueller-IP-Host-Adressteil abhängig von physikalischen Parametern erzeugbar ist, die für die Kommunikationsvorrichtung (32) repräsentativ sind.

14. Kommunikationssystem (1) nach einem der Ansprüche 9 bis 13, **dadurch gekennzeichnet, dass** die zweite Kommunikationsvorrichtung (32) eine Einrichtung zum Bestimmen, mit welchen Netzwerken sie aktuell verbunden ist, aufweist.

15. Computerprogrammerzeugnis mit Computerprogrammmitteln, die so ausgebildet sind, dass sie das Verfahren gemäß den Ansprüchen 1 bis 8 ausführen, wenn eine Ausführung auf einem Computer, einem digitalen Signalprozessor oder dergleichen erfolgt.

16. Computer-lesbare Speichereinrichtung, die so ausgebildet ist, dass sie ein Computerprogrammerzeugnis gemäß dem Anspruch 15 speichert.

**Revendications**

1. Procédé de communication entre un premier et un second dispositifs de communication (31, 32), qui sont liés l'un à l'autre via un réseau de communication (33), dans lequel ledit premier et ledit second dispositifs de communication (31, 32) sont au moins raccordés à un réseau IP (34) et un réseau de diffusion sans fil numérique (38) étant des parties dudit réseau de communication (33), respectivement, comprenant les étapes suivantes de :

assignation de sous-réseaux IP virtuels et des parties d'adresse d'un réseau IP virtuel correspondant audit réseau de diffusion sans fil numérique et/ou des parties de celui-ci et/ou des services offerts via ledit réseau de diffusion numérique,
assignation d'un hôte IP virtuel et une partie d'adresse d'un hôte IP virtuel correspondant audit second dispositif de communication,
dans lequel, afin de transférer des informations dudit second dispositif de communication (32) audit premier dispositif de communication (31),

a) des informations sont encapsulées dans des paquets IP comprenant une partie d'adresse de réseau IP et une partie d'adresse d'hôte IP assignée audit premier dispositif de communication (31) respectivement,
b) lesdits paquets ID sont envoyés audit premier dispositif de communication (31) utilisant ledit réseau IP, dans lequel ledit second dispositif de communication (32) utilise ladite partie d'adresse de réseau IP virtuel et ladite partie d'adresse d'hôte IP virtuel assignée audit second dispositif de communication ou une adresse de réseau IP et une partie d'adresse d'hôte IP assignée audit second dispositif de communication comme une adresse de source IP lors de l'envoi de paquets IP via ledit réseau IP (34) audit premier dispositif de communication (31),

dans lequel, afin de transférer des informations à partir dudit premier dispositif de communication (31) audit second dispositif de communication (32),

a) des informations sont encapsulées dans des paquets IP comprenant l'adresse de source IP contenue dans des paquets IP reçus dudit second dispositif de communication (32),
b) lesdits paquets d'IP sont diffusés via ledit réseau de diffusion sans fil numérique (38) si ladite adresse de source IP correspond à ladite partie d'adresse de réseau IP virtuel et ladite partie d'adresse d'hôte IP virtuel dudit second dispositif de communication, ou sont envoyés via ledit réseau IP (34) audit second dispositif de communication (32) si ladite adresse de source IP correspond à ladite partie d'adresse de réseau IP et à ladite partie d'adresse d'hôte IP assignée audit second dispositif de communication.

2. Procédé selon la revendication 1, **caractérisé par** la détermination desdites parties d'adresse de réseau IP virtuel selon un premier algorithme qui crée lesdites parties d'adresse de réseau IP virtuel en fonction des paramètres physiques étant représentatifs dudit réseau de diffusion sans fil numérique (38) et/ou des parties de celui-ci et/ou des services offerts via ledit réseau de diffusion sans fil numérique (38), respectivement.

3. Procédé selon la revendication 1 ou 2, **caractérisé par** la détermination de ladite partie d'adresse d'hôte IP virtuel selon un second algorithme qui crée ladite partie d'adresse d'hôte IP virtuel en fonction des paramètres physiques représentatifs pour ledit second dispositif de communication (32) ou des parties de celui-ci.

4. Procédé selon la revendication 3, **caractérisé en ce que** lesdits premier et second algorithmes fonctionnent dans ledit second dispositif de communication (32).

5. Procédé selon la revendication 1, **caractérisé en ce que** ledit traitement de génération desdites parties d'adresse de réseau IP virtuel/partie d'adresse d'hôte IP virtuel est gérée par une base de données d'adresse IP centrale étant située dans ledit réseau de communication (33), ladite base de données d'adresse IP centrale fournissant des parties d'adresse IP libre lorsqu'elle est contactée par ledit second dispositif de communication (32).

6. Procédé selon l'une quelconque des revendications 1 à 5, **caractérisé en** utilisant un routeur de diffusion (37) étant raccordé audit premier dispositif de communication (31) et audit réseau de diffusion sans fil numérique (38) pour router des paquets IP qui comprennent lesdites parties d'adresse de réseau IP virtuel et qui ont été reçus à partir dudit premier dispositif de communication (31) via ledit réseau de diffusion sans fil numérique (38) sur ledit second dispositif de communication (32).

7. Procédé selon la revendication 6, **caractérisé en ce que** ledit premier algorithme fonctionne dans ledit routeur de diffusion (37).

8. Procédé selon l'une quelconque des revendications 1 à 7, **caractérisé en ce que** lesdites parties d'adresse de réseau IP virtuel sont assignées à des sous-canaux DAB et/ou des services DRM.

9. Système de communication (1), comprenant :

   un premier dispositif de communication (31) et un second dispositif de communication (32) étant raccordables à un réseau IP et un réseau de diffusion sans fil numérique, respectivement,
   un moyen pour assigner des sous-réseaux IP virtuels et des parties d'adresse de réseau IP virtuel correspondant audit réseau de diffusion sans fil numérique (38) et/ou des parties de celui-ci et/ou des services offerts via ledit réseau de diffusion sans fil numérique, respectivement,
   un moyen pour déterminer une partie d'adresse d'hôte IP virtuel étant représentative pour ledit second dispositif de communication (32),
   un réseau de communication (33) raccordant ledit premier dispositif de communication (31) audit second dispositif de communication (32), ledit réseau de communication (33) comprenant ledit réseau IP (34) et ledit réseau de diffusion sans fil numérique (38),
   dans lequel, afin de transférer des informations à partir dudit second dispositif de communication (32) audit premier dispositif de communication (31),

   a) des informations sont encapsulées dans des paquets IP comprenant une partie d'adresse de réseau IP et une partie d'adresse de réseau IP assignée audit premier dispositif de communication (31), respectivement,
   b) lesdits paquets IP sont envoyés audit premier dispositif de communication (31) utilisant ledit réseau IP, dans lequel ledit second dispositif de communication (32) utilise ladite partie d'adresse de réseau IP virtuel et ladite partie d'adresse de réseau IP virtuel assignée audit second dispositif de communication ou une adresse de réseau IP et une partie d'adresse hôte IP assignée audit second dispositif de communication comme une adresse de source IP lors de l'envoi des paquets IP via ledit réseau IP (34) audit premier dispositif de communication (31),

dans lequel, afin de transférer des informations à partir dudit premier dispositif de communication (31) audit second dispositif de communication (32),

   a) des informations sont encapsulées dans des paquets IP comprenant l'adresse de source IP contenue dans des paquets IP reçus dudit second dispositif de communication (32),
   b) lesdits paquets IP sont diffusés via ledit réseau de diffusion sans fil numérique (38) si ladite adresse de source IP correspond à ladite partie d'adresse de réseau IP virtuel et ladite partie d'adresse d'hôte IP virtuel dudit second dispositif de communication, ou sont envoyés via ledit réseau IP (34) audit second dispositif de communication (32) si ladite adresse de source IP correspond à ladite partie d'adresse de réseau IP et ladite partie d'adresse d'hôte IP assignée audit second dispositif de communication.

10. Système de communication (1) selon la revendication 9, **caractérisé par** un routeur de diffusion (37) ledit routeur de diffusion raccordant ledit premier dispositif de communication (31) audit réseau de diffusion sans fil numérique (38), ledit routeur de diffusion (37) comprenant un moyen pour :

   assigner des sous-réseaux IP virtuels et des parties d'adresse de réseau IP virtuels correspondant audit réseau de diffusion sans fil numérique 38 et/ou des parties de celui-ci et/ou des services offerts via ledit réseau de diffusion sans fil numérique, respectivement,

router des paquets IP qui comprennent lesdites parties d'adresse de réseau IP virtuels et qui ont été reçus dudit réseau IP dans ledit réseau de diffusion sans fil numérique (38).

**11.** Système de communication (1) selon la revendication 9 ou 10, **caractérisé en ce que** ledit réseau IP (34) est l'Internet raccordant directement ledit premier dispositif de communication (31) avec ledit second dispositif de communication (32).

**12.** Système de communication (1) selon la revendication 10, **caractérisé en ce que** ledit routeur de diffusion (37) relie l'Internet (34) audit réseau de diffusion sans fil numérique (38).

**13.** Système de communication (1) selon l'une quelconque des revendications 9 à 12, **caractérisé en ce que** lesdites parties d'adresse de réseau IP virtuel sont créables en fonction des paramètres physiques étant représentatifs dudit réseau de diffusion sans fil (38) et/ou des parties de celui-ci et/ou des services offerts via ledit réseau de diffusion sans fil numérique, respectivement, alors que ladite partie d'adresse d'hôte IP virtuel est créable en fonction des paramètres physiques étant représentatifs pour ledit dispositif de communication (32).

**14.** Système de communication (1) selon l'une quelconque des revendications 9 à 13, **caractérisé en ce que** ledit second dispositif de communication (32) comprend un moyen pour déterminer à quel réseau ledit dispositif de communication (32) est actuellement raccordé.

**15.** Produit de programme d'ordinateur comprenant un moyen de programme d'ordinateur adapté pour réaliser le procédé selon les revendications 1 à 8 lorsqu'il est exécuté sur un ordinateur, un processeur de signal numérique ou analogue.

**16.** Moyen de stockage lisible par ordinateur adapté pour stocker un produit de programme d'ordinateur selon la revendication 15.

*figure 1*

EP 1 388 993 B1

*figure 2*

IP Layer

incoming/outgoing IP
address interface
(traditional view)

incoming IP address
interfaces

outgoing IP address
interfaces

(a)

(c) 26

22

24

GSM

LAN

WLAN

broadcast
medium

20

21

23

(b)

25

*figure 3*

(a)  Traditional 2 way IP network

(b)  2 way IP network + broadcast medium

(c)  Traditional 2 way IP network combination

figure 4

figure 5

*figure 6*

EP 1 388 993 B1

figure 7

56 Satellite

57 Radio tower

50

58 Internet through WAN

55 Radio

54 Television

53

51 Multinetwork Home Access Point (MNHAP)

52 IBM Compatible

52 IBM Compatible

52 IBM Compatible

Home network

EP 1 388 993 B1

26

Fig. 8A : IP v4 Datagram

Fig. 8B : IP v4 Address

Fig. 8C

Fig. 8D

Fig. 8E

IP v4 Addresses Types (A,B, and C)

Fig 8F: IP Address Example